# EUROPÄISCHE PATENTSCHRIFT

(11) **EP 1 894 363 B1**
(45) Veröffentlichungstag und Bekanntmachung des Hinweises auf die Patenterteilung: **30.11.2011**
(21) Anmeldenummer: 06753175.6
(22) Anmeldetag: 18.05.2006
(51) Int. Cl.: H04L 12/56

(54) **VERFAHREN UND UNABHÄNGIGES KOMMUNIKATIONSTEILNETZ ZUM ERMITTELN LABELVERMITTELTER ROUTEN IN EINEM SOLCHEN KOMMUNIKATIONSTEILNETZ**
METHOD AND INDEPENDENT COMMUNICATIONS SUBNET FOR DETERMINING LABEL-SWITCHED ROUTES IN A COMMUNICATIONS SUBNET OF THIS TYPE
PROCEDE ET ELEMENT DE RESEAU DE COMMUNICATION INDEPENDANT DESTINES A DETERMINER DES ROUTES ETIQUETEES DANS UN TEL ELEMENT DE RESEAU DE COMMUNICATION

(30) Priorität: 16.06.2005 DE 102005028008
(43) Veröffentlichungstag der Anmeldung: 05.03.2008
(73) Patentinhaber: Deutsche Telekom AG, 53113 Bonn (DE)
(72) Erfinder: GEIB, Rüdiger, 64297 Darmstadt (DE)
(74) Vertreter: Blumbach - Zinngrebe
(86) Internationale Anmeldenummer: PCT/DE2006/000859
(87) Internationale Veröffentlichungsnummer: WO 2006/133669

(56) Entgegenhaltungen:
- EP-A- 1 294 202
- US-A1- 2002 194 368
- US-A1- 2004 215 817
- US-A1- 2005 094 636
- LIN Y-D ET AL: "QOS ROUTING GRANULARITY IN MPLS NETWORKS" IEEE COMMUNICATIONS MAGAZINE, IEEE SERVICE CENTER,NEW YORK, NY, US, Bd. 40, Nr. 6, Juni 2002 (2002-06), Seiten 58-65, XP001123512 ISSN: 0163-6804
- Ljiljana Adamovic, Karol Kowalik and Martin Collier: "Traffic Control in IP Networks with Multiple Topology Routing", Lecture Notes in Computer Science, 2005, vol. 3421/2005 22 April 2005 (2005-04-22), pages 335-342, DOI: 10.1007/978-3-540-31957-3_40 Retrieved from the Internet: URL:http://www.springerlink.com/content/rr v7vjnh2x7qacv4/fulltext.pdf [retrieved on 2010-12-01]
- ROSEN CISCO SYSTEMS E ET AL: "Multiprotocol Label Switching Architecture; rfc3031.txt", IETF STANDARD, INTERNET ENGINEERING TASK FORCE, IETF, CH, 1 January 2001 (2001-01-01), XP015008814, ISSN: 0000-0003

## Beschreibung

### Beschreibung

Die Erfindung betrifft ein Verfahren zum Ermitteln labelvermittelter Routen zwischen einem Quell- und einem Zielrouter eines unabhängigen Kommunikationsteilnetzes, über das Informationspakete mit einer vorbestimmten IP-Zieladresse übertragen werden sollen. Ferner bezieht sich die Erfindung auf ein zur Durchführung des Verfahrens geeignetes unabhängiges Kommunikationsteilnetz sowie darin verwendete Router.

Verbundnetze, wie zum Beispiel das Internet, setzen sich aus unabhängigen Kommunikationsteilnetzen, auch autonome Systeme genannt, zusammen, um Daten beliebiger Art über weite Strecken übertragen zu können. Die Verkehrslenkung von Informationspaketen, auch Routing genannt, ist in Verbundnetzen wegen der Inhomogentität der Kommunikationsteilnetze sehr komplex. Demzufolge wurde vorgeschlagen, in Verbundnetzen einen sogenannten zweistufigen Routing-Algorithmus einzusetzen. Danach wird innerhalb eines unabhängigen Kommunikationsteilnetzes ein internes Teilnetz-Routingprotokoll, welches auch als Intra-Domain-Routing-Protocol bekannt ist, und zwischen den Kommunikationsteilnetzen ein externes Routingprotokoll, beispielsweise das externe Gateway-Protokoll, auch als Boarder Gateway Protocol (BGP) bekannt, benutzt. Bereits an dieser Stelle sei erwähnt, dass sich die Erfindung lediglich auf das Routen von Paketen innerhalb eines unabhängigen Kommunikationsteilnetzes und nicht auf das Routen von Paketen zwischen Kommunikationsteilnetzen bezieht.

Die internen Teilnetz-Routingprotokolle wurden von der Internet Engineering Task Force (IETF) weiterentwickelt. Heutzutage finden vornehmlich sogenannte Link-State-Protokolle, wie zum Beispiel das IS-IS-Protokoll oder das OSPF (Open Shortest Path First)-Protokoll Anwendung. Die erwähnten internen Teilnetz- Routingprotokolle sind beispielsweise in dem Lehrbuch "Computernetzwerke, 3.Auflage, Prentice Hall, Seiten 389ff. und Seiten 454ff." von Andrew S. Tannenbaum beschrieben.

Mit Hilfe der bekannten internen Teilnetz-Routingprotokolle ist es möglich, verschiedene Routentopologien zwischen Ursprungs- und Zielroutern eines unabhängigen Kommunikationsteilnetzes einzurichten, um Informationen zum Beispiel in Abhängigkeit ihrer Dienstqualität über verschiedene Routen übertragen zu können. Hierzu wird das Kommunikationsteilnetz in an sich bekannter Weise durch einen gerichteten Grafen, der Knoten (Router) und Kanten (Pfade) aufweist, dargestellt. Jeder Kante wird dann eine bestimmte Gewichtung, die zum Beispiel von der Entfernung, Verzögerung und dergleichen abhängt, zugeordnet. Aus diesen Informationen werden anschließend die Routentopologien, d. h. die unterschiedlichen Übertragungswege zwischen einem Ursprungs- und einem Zielrouter, die Pakete mit einer gemeinsamen Zieladresse nehmen können, ermittelt.

Darüber hinaus existieren bereits labelvermittelnde Protokolle (LDP), die vornehmlich bei Multi Protocol Label Switching Architekturen (MPLS) für eine schnelle Paketvermittlung innerhalb IP-basierter Backbone-Netzwerke angewendet werden. Bei einem labelvermittelnden Protokoll vereinbaren in an sich bekannter Weise benachbarte Router, beginnend mit dem Zielrouter, der durch eine FEC-Zieladresse zuvor festgelegt worden ist, Pfadkennzeichen, auch Label genannt, so dass am Ende der Labelzuordnung eine Route aus mehreren mit Label gekennzeichneten Pfaden zwischen dem Ursprungs- und Zielrouter festgelegt wird. Die besondere Art und Weise der Labelzuordnung kann auch als Downstream-Labelverteilung bezeichnet werden, weil die Pfadkennzeichen entgegen der Übertragungsrichtung der Pakete vergeben werden. Zu der Downstream-Labelverteilungsmethode gehören beispielsweise die Downstream-On-Demand- und die Downstream-Unsolicited-Methode. Die Labelkennzeichen geben bezüglich einer FEC-Zieladresse, die auch als Forwarding Equivalent Class (FEC)-Prdresse bezeichnet wird, an, welche an einem Router ankommenden Pfade mit welchen vom Router abgehenden Pfaden logisch verbunden sind. Die dazu erforderlichen Informationen werden in Routingtabellen der jeweiligen Router gespeichert.

In US 2002/0194368 A1 wird beispielsweise ein Router beschrieben, welcher für MPLS ausgebildet und für den Einsatz in Internet-Backbone-Netzen vorgesehen ist, wobei der Router ferner dazu ausgebildet ist, zur Bestimmung einer FEC (forward Equivalence Class) Informationen aus allen OSI-Schichten zu verwenden, anstatt wie üblicherweise nur eine ziel-IP-A-dresse.

In US 2005/0094636 A1 wird eine MPLS-Vorrichtung und ein Verfahren beschrieben, wobei ein erstes Weiterleitungsverfahren basierend auf der Zieladresse und ein zweites Weiterleitungsverfahren basierend auf einem Label vorgesehen sind, und wobei eine Information über das Auftreten eines Fehlers in einem labelvermittelten Pfad in einer weiterleitungstabelle hinterlegt wird und in Abhängigkeit davon, welche Information in dem entsprechenden Feld hinterlegt ist, das erste oder zweite Weiterleitungsverfahren ausgewählt wird, und wobei ein labelvermittelter Pfad beispielsweise mittels eines Signalisierungsprotokolls wie LDP (Label Distribution Protocol) aufgebaut wird.

In "QoS Routing Granularity in MPLS Networks" von Ying-Dar Lin und Nai-Bin Hsu, erschienen in IEEE Communications Magazine, Juni 2002, wird der Effekt einer Randbedingungenbasierten Routing-Granularität auf die Skalierbarkeit und das Blockierungsverhalten in einem MPLS-Netzwerk beschrieben.

In "Traffc Control in IP Networks with Multiple Topology Routing" von L. Adamovic et al., erschienen in ICN 2005, LNCS 3421, Seiten 335 bis 342, wird eine Erweiterung des MPLS Paketformats beschrieben, welches durch eine Mehrzahl virtueller Netzwerktopologien ein Multi-Pfad-Routing unterstützt, wobei ein Virtueller-Topologie-Algorithmus dazu dient, zu Lastenausgleichszwecken ankommenden Datenverkehr auf mehrere Topologien zu verteilen.

Der Erfindung liegt nunmehr die Aufgabe zugrunde, ein effizienteres Routingverfahren für ein unabhängiges Kommunikationsteilnetz eines Verbundnetzes bereitzustellen.

Der Kerngedanke der vorliegenden Erfindung ist darin zu sehen, das bisher nur bei IP-Backbone-Netzen angewandte Labelverteilungs-Protokoll - auch Label Distribution Protocol (LDP) genannt, mit einem internen Teilnetz-Routingprotokoll, welches in unabhängigen Kommunikationsteilnetzen angewandt wird, zu koppeln, um die Verkehrslenkung von Informationspaketen über verschiedene Routentopologien in einem unabhängigen Kommunikationsteilnetz effizienter und schneller gestalten zu können.

Das oben genannte technische Problem wird zum einen durch die Verfahrensschritte nach Anspruch 1 gelöst.

Danach ist ein Verfahren zum Ermitteln labelvermittelter Routen zwischen einem Quell- und einem Zielrouter eines unabhängigen Kommunikationsteilnetzes, über das Informationspakete mit einer vorbestimmten Zieladresse übertragen werden sollen, vorgesehen. Zunächst werden in Abhängigkeit von wenigstens einem Parameter, beispielsweise von der Dienstqualität (QoS = Quality of Service) zu übertragender Informationen, unter Anwendung eines IP-basierten internen Teilnetz-Routingprotokolls unterschiedliche Routentopologien innerhalb des Kommunikationsteilnetzes berechnet, wobei eine Topologie-Routingtabelle für jede Routentopologie, zu der ein Router gehört, in diesem Router gespeichert wird. Danach werden die Routentopologien und die dazu gehörenden Router ermittelt, über die Informationspakete mit der vorbestimmten IP-Zieladresse von dem Quellrouter zum Zielrouter übertragen werden sollen. Jedem Routenabschnitt oder Pfad einer ermittelten Routing-Topologie wird dann unter Anwendung eines herkömmlichen Labelverteilungsprotokolls, in der englischen Fachliteratur als Label Distribution Protocol (LDP) bekannt ein Label, d. i. ein Pfadkennzeichen, zugeordnet.

Vorzugsweise wird das Labelverteilungsprotokoll häufig in der Mehrfachprotokoll-Labelvermittlungsarchitektur (MPLS; Multi Protocol Label Switching) angewendet, wobei das interne Teilnetz-Routingprotokoll ein Link-State-Protokoll, insbesondere das IS-IS- (Intermediate System to Intermediate System) oder das OSPF (Open Shortest Path First)-Routingprotokoll ist.

Um das Ermitteln von Routen in einem unabhängigenn Kommunikationsteilnetz effizient durchführen zu können, ermitteln nur die Router - allgemein auch Spaltungspunkte genannt - , die zu mehreren Routentoplogien gehören, verschiedene Label für abgehende Pfade, die zu unterschiedlichen Routentopologien gehören. An dieser Stelle sei erwähnt, dass einem Zielrouter mehrere Zieladressen, d. h. FECs zugeordnet sein können. Auf diese Weise ist es möglich, dass Pakete mit unterschiedlichen IP-Zieladressen mittels derselben Label und somit über dieselbe Route zwischen vom Ursprungsrouter zum Zielrouter geleitet werden.

Das obengenannte technische Problem wird ebenfalls durch einen Router gelöst, der für den Einsatz in einem unabhängigen Kommunikationsteilnetz entsprechend angepasst ist. Dazu weist der Router eine Einrichtung auf, die ein IP-basiertes internes Teilnetz-Routingprotokoll ausführt, um in Abhängigkeit von wenigstens einem Parameter, insbesondere der Dienstqualität (QoS) zu übertragender Informationen, unterschiedliche Routentopologien innerhalb eines unabhängigen Kommunikationsteilnetzes zu ermitteln. Ferner ist eine Einrichtung vorgesehen, die das Labelverteilungsprotokoll (Label Distribution Protocol, LDP) ausführt, um mit jedem benachbarten Router, der derselben Routentoplogie angehört, einen Label für den zwischen benachbarten Routern liegenden Pfad zu bestimmen. In einer Speichereinrichtung können wenigstens eine Topologie-Routingtabelle und wenigstens eine labelbasierte Routingtabelle abgelegt werden.

Das der Erfindung zugrundeliegende Problem wird zudem durch ein Kommunikationsteilnetz zur Durchführung eines Verfahrens nach einem der Ansprüche 1 bis 4, welches mehrere Routern nach Anspruch 5 aufweist, gelöst.

Die Erfindung wird nachfolgend anhand eines Ausführungsbeispiels in verbindung mit den Figuren näher erläutert. Es zeigen:
- Fig. 1: ein Verbundnetz mit beispielsweise zwei unabhängigen Kommunikationsteilnetzen, und
- Fig. 2-3: Routingtabellen verschiedener Router.

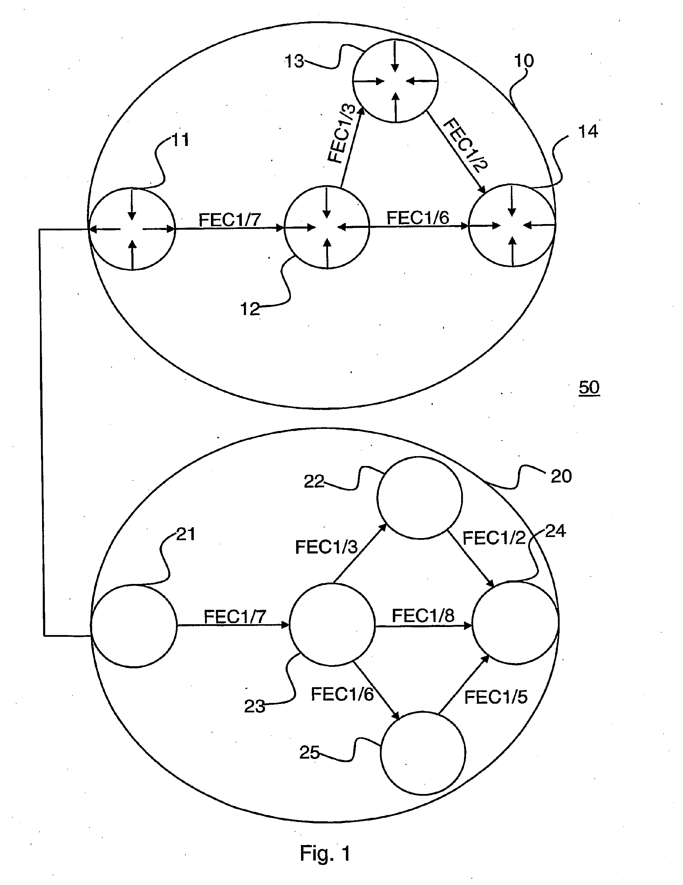

Fig. 1 zeigt ein mit 50 bezeichnetes Verbundnetz, beispielsweise das Internet, welches im vorliegenden Beispiel zwei unabhängige Kommunikationsteilnetze 10 und 20 umfasst. In der Fachliteratur werden unabhängige Kommunikationsteilnetze auch als autonome Systeme bezeichnet. Das Kommunikationsteilnetz 10 enthält beispielsweise zwei Grenzrouter 11 und 14 sowie zwei interne Router 12 und 13, die in der dargestellten Weise miteinander verbunden sind. Unter einem Grenzrouter ist ein Router zu verstehen, der am Rande eines unabhängigen Kommunikationsteilnetzes angeordnet ist und die Schnittstelle zu einem anderen unabhängigen Kommunikationsteilnetz bildet. Interne Router sind Router, die keine Verbindung außerhalb eines Kommunikationsteilnetzes haben. Die beiden Kommunikationsteilnetze ermöglichen die Übertragung von MPLS-Paketen, die neben einem mehrere Bits umfassenden. Labelfeld auch ein drei Bits umfassendes EXP-Feld enthalten, welches beispielsweise die Dienstqualität einer zu übertragenden Nachricht festlegt.

Im dargestellten Beispiel weist das unabhängige Kommunikationsteilnetz 20 zwei Grenzrouter 21 und 24 sowie drei interne Router 22, 23 und 25 auf. Die in den Kommunikationsteilnetzen 10 und 20 dargestellten gerichteten Pfade weisen in die Übertragungsrichtung zu übertragender MPLS-Pakete. Wie weiter unten noch näher erläutert wird, ist jeder Pfad Bestandteil einer Routentopologie, der durch zumindest eine FEC-Zieladresse FEC1 sowie ein Pfadkennzeichen gekennzeichnet ist. Bei einer FEC-Adresse handelt es sich um eine IP-Adressinformation, welche neben einer IP-Adresse einen Präfix enthält. Ein Router kennt nicht nur die IP-Adresse, sondern entsprechend dem Präfix die der IP-Adresse folgenden IP-Adressen.

Nachfolgend wird die Funktionsweise einer Verkehrslenkung von Informationspaketen innerhalb des Kommunikationsteilnetzes 10 und innerhalb des Kommunikationsteilnetzes 20 näher erläutert.

Zunächst wird ein Beispiel hinsichtlich des Kommunikationsteilnetzes 10 erläutert.

Angenommen sei, dass Informationspakete vom Ursprungsgrenzrouter 11 zum Zielgrenzrouter 14 geleitet werden sollen. Angemerkt sei, dass die am Zielgrenzrouter ankommenden Informationspakete direkt zum Zielteilnehmer, in ein anderes Kommunikationsnetz oder Teilnetz geleitet werden können. Obwohl im vorliegenden Beispiel als Ursprungs- und Zielrouter die beiden Grenzrouter 11 und 14 verwendet werden, können natürlich auch interne Router als Ursprungs- und Zielrouter zu Einsatz kommen.

Zunächst ermitteln die Router des Kommunikationsteilnetz 10 unter Anwendung eines bekannten internen Teilnetz-Routingprotokolls und unter Berücksichtigung verschiedener Dienstqualitäten der zu übertragenden Informationen mehrere Routentopologien innerhalb des Kommunikationsteilnetzes 10.

Hierfür ist erforderlich, dass die IP-Zieladresse/Präfix FEC1, unter der Informationspakete zum Zielgrenzrouter 14 übertragen werden sollen, bekannt ist. Bei der IP-Zieladresse/Präfix FEC1 handelt es sich um eine sogenannte Forwarding Equivalence Class (FEC)-Adresse.

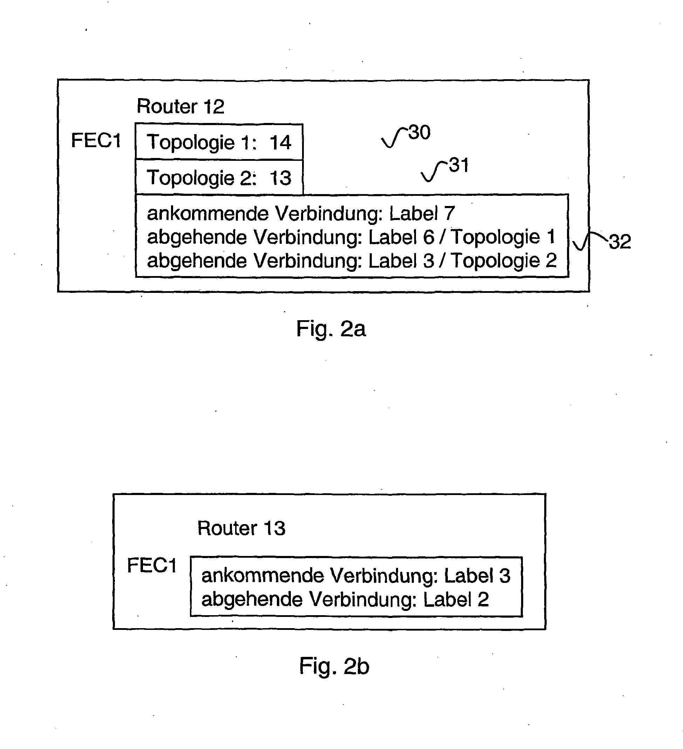

Weiterhin sei angenommen, dass im vorliegenden Beispiel unter der vorbestimmten IP-Zieladresse/Präfix FEC1 Informationen übertragen werden sollen, welche Sprache oder Daten enthalten. Mit Hilfe von besonderen Gewichtungen, die den die Router verbindenden Pfaden vom Netzbetreiber zugeordnet werden, können die Router des Kommunikationsteilnetzes 10 unter Anwendung eines herkömmlichen internen Teilnetz-Routingprotokolls unterschiedliche Routentopologien für MPLS-Pakete, welche Sprachinformationen oder Daten enthalten, ermitteln. Die Unterscheidung des Informationstyps erfolgt in einem MPLS-Paket anhand der drei EXP-Bits. Beispielsweise wird für die IP-Zieladresse/Präfix FEC1 eine erste Routentopologie vom Ursprungsgrenzrouter 11 über den internen Router 12 zum Zielgrenzrouter 14 festgelegt, um Sprachinformationen, die kurze Verzögerungszeiten verlangen, übertragen zu können. Weiterhin wird für die IP-Zieladresse/Präfix FEC1 eine zweite Routentopologie definiert, die vom Ursprungsgrenzrouter 11 über die internen Router 12 und 13 zum Zielgrenzrouter 14 führt, um Daten, die keine Sprachinformationen enthalten, übertragen zu können. Demzufolge werden in dem Router 12 unter der IP-Zieladresse/Präfix FEC1 zwei Topologie-Routingtabellen abgelegt, wie in Fig. 2a dargestellt. In der ersten Topologie-Routingtabelle ist neben der IP-Zieladresse/Präfix FEC1 der nächste Router 14 eingetragen In der zweiten Topologie-Routingtabelle ist neben der IP-Zieladresse/Präfix FEC1 der nächste Router 13 eingetragen. In den Grenzroutern 11 und 14 sowie dem internen Router 13 sind lediglich Hinweise auf den jeweils einen benachbarten Router eingetragen, da für die im Beispiel dargestellte Informationsrichtung jeder dieser Router nur einen einzelnen abgehenden Pfad aufweist. Eine entsprechende Routingtabelle ist für den Router 13 in Fig. 2b dargestellt. Eine vollständige Routentopologie ergibt sich somit dadurch, dass die Routingtabellen mehrerer Router hintereinander ausgelesen werden. Aus den Routingtabellen der Router 11, 12 und 14 ergibt sich somit die erste Routentopologie, während sich aus den Rotingtabellen der Router 11, 12, 13 und 14 die zweite Routentopologie ergibt. Im nächsten Schritt werden nunmehr jedem Routenabschnitt der ersten und zweiten Routentopologie unter Anwendung des Labelverteilungsprotokolls LDP, welches normalerweise nur in IP-Backbone-Netzwerken verwendet wird, Pfadkennzeichen zugeordnet. Hierbei werden Schritt für Schritt den Routingabschnitten Pfadkennzeichen zugeordnet, wobei beginnend am Zielgrenzrouter 14 Labels mit den übrigen Routern bis hin zum Ursprungsrouter 11 vergeben werden. Hierzu überträgt der Zielgrenzrouter 14 zunächst die IP-Zieladresse/Präfix FEC1 zu seinen benachbarten internen Routern 12 und 13, um mit diesen geeignete Pfadkennzeichen zu vereinbaren. Nach Erhalt der IP-Zieladresse/Präfix FEC1 prüfen die beiden internen Router 12 und 13 zunächst, ob sie hinsichtlich der empfangenen IP-Zieladresse/Präfix FEC1 benachbarte Router des Zielgrenzrouters 14 sind. Ferner prüfen die internen Router 12 und 13, ob sie Teil einer oder mehrerer Routentopologien sind. Im vorliegenden Beispiel stellt der Router 13 fest, dass er nur eine einzige abgehende Verbindung, und zwar zum Router 14, besitzt. Demzufolge weist der Router 13 dem abgehenden Pfad den Label 2 zu, wie dies in Fig. 1 dargestellt ist. Der interne Router 12 hingegen stellt fest, dass er Teil von zwei Routentopologien ist, über die Informationspakete mit der IP-Zieladresse FEC1 zum Zielgrenzrouter 14 übertragen werden sollen. Der Router 12 fungiert somit als Spaltungspunkt, da ankommende MPLS-Pakete in Abhängigkeit vom Zustand der drei EXP-Bits an verschiedene Router weitergeleitet werden können. Weiterhin stellt der interne Router 12 fest, dass der Zielgrenzrouter 14 sein unmittelbarer Nachbar (in der englischen Fachliteratur auch next hop genannt) ist, und somit der Routentopologie 1 angehört. Nur der Router 12, der zu mehreren Routentopologien gehört, muss nunmehr mehrere Pfadkennzeichen ermitteln und den entsprechenden Pfaden zuordnen. Beispielsweise ordnet der Router 12 dem abgehenden Pfad der ersten Routentopologie den Label 6 zu, wodurch sichergestellt wird, dass mit der IP-Zieladresse/Präfix FEC1 empfangene Informationspakete, welche Sprachsignale enthalten, über den mit dem Label 6 bezeichneten Pfad zum Zielgrenzrouter 14 übertragen werden. Es sei nochmals betont, dass einem Label mehrere dem Zielgrenzrouter 14 zugeordnete FECs zugewiesen werden können.

Weiterhin erkennt der Router 12, dass er ein direkter Nachbar des Routers 13 ist, über den die zweite Routentopologie zum Zielgrenzrouter 14 besteht. Hinsichtlich der zweiten Routentopologie ordnet der Router 12 dem abgehenden Pfad zum Router 13 den Label 3 zu, wie dies in der Fig. 1 dargestellt ist. Der Router 13 verbindet nunmehr logisch den mit Label 3 bezeichneten ankommenden Pfad mit dem mit Label 2 bezeichneten abgehenden Pfad, um Informationspakete mit der IP-Zieladresse/Präfix FEC1 zum Zielgrenzrouter 14 weiterleiten zu können. Die dazugehörende, im Router 13 abgelegte Routingtabelle ist in Fig. 2b dargestellt.

Im nächsten Schritt überträgt nunmehr der Router 12 die empfangene IP-Zieladresse/Präfix FEC1 zum Ursprungsgrenzrouter 11, der wiederum prüft, ob er der nächste Router zum internen Router 12 ist. Der Ursprungsgrenzrouter 11 stellt fest, dass er bezüglich der IP-Zieladresse/Präfix FEC1 lediglich eine Verbindung zum Router 12 besitzt. Daraufhin teilt der Router 11 dem Router 12 mit, dass Informationspakete mit der IP-Zieladresse/Präfix FEC1 ungeachtet der Dienstqualität über den mit dem Label 7 gekennzeichneten Pfad übertragen werden. Der Router 12 wiederum legt fest, dass die über den mit Label 7 bezeichneten Pfad ankommenden Informationspakete mit der IP-Zieladresse/Präfix FEC1 über die erste Routentopologie und somit über den mit dem Label 6 bezeichneten Routenabschnitt unmittelbar zum Zielgrenzrouter 14 weiterzuleiten sind, wenn das Informationspaket Sprachsignale enthält. Hingegen wird ein Informationspaket mit der IP-Zieladresse/Präfix FEC1 über die zweite Routentopologie, d. h. über den mit Label 3 bezeichneten Routenabschnitt zum Router 13 weiterzuleiten ist, wenn die Informationspakete Daten enthalten. Die entsprechenden Routingtabellen sind in den Fig. 2a und 2b für den Router 12 bzw. den Router 13 gezeigt.

Nachdem die Routen zwischen dem Ursprungsgrenzrouter 11 und dem Zielgrenzrouter 14 ermittelt worden sind, können MPLS-Pakete mit der IP-Zieladresse/Präfix FEC1 über das Kommunikationsteilnetz 10 mit Hilfe der vergebenen Labels gelenkt werden. Um die richtige Route zu finden, werden in den beteiligten Routern das Labelfeld und gegebenenfalls die drei EXP-Bits in den zu übertragenden MPLS-Paketen ausgewertet. Lediglich der Router 12 muss dazu aktiviert werden, auch die EXP-Bits in einem MPLS-Paket auszuwerten. Denn der Router 12 soll in Abhängigkeit des Informationstyps, d. h. Sprach- oder Dateninformation, MPLS-Pakete über unterschiedliche Routen zum Zielgrenzrouter 14 weiterleiten.

Nunmehr wird ein weiteres Beispiel hinsichtlich des Kommunikationsteilnetzes 20 erläutert.

Das Kommunikationsteilnetz 20 unterscheidet sich vom Kommunikationsteilnetz 10 dadurch, dass drei interne Router 22, 23 und 25 vorhanden sind, wobei der interne Router 23 drei abgehende Pfade aufweist, während der entsprechende Router 12 des Kommunikationsteilnetzes 10 lediglich zwei abgehende Pfade aufweist, wenn eine Kommunikationsrichtung von links nach rechts zugrunde gelegt wird.

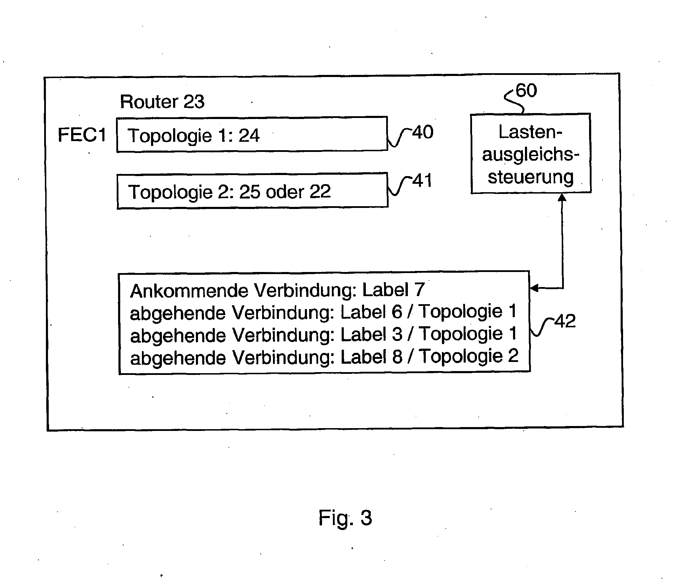

Die Ermittlung der verschiedenen Routentopologien sowie die Zuordnung von Labeln zu den Routenabschnitten der verschiedenen Routentopologien erfolgt in ähnlicher Weise, wie sie hinsichtlich des Kommunikationsteilnetzes 10 beschrieben wurde. Der einzige Unterschied besteht darin, dass der interne Router 23 einen Lastausgleich berücksichtigt. Dies bedeutet, dass beispielsweise für die ermittelte zweite Routentopologie, welche zur Übertragung von Datenpaketen vorgesehen ist, eine Route über die Router 21, 23, 22 und 24 und alternativ über die Router 21, 23, 25 und 24 festgelegt werden. Demzufolge sorgt der Router 23 dafür, dass in Abhängigkeit des Lastzustandes des Kommunikationsteilnetzes 20 der Router 23 vom Router 21 über den mit Label 7 bezeichneten Pfad Routenstrecke empfangenen Informationspakete, welche Daten enthalten, beispielsweise gleichmäßig über die Router 22 oder 25 zum Zielgrenzrouter 24 weiterleitet. Die hierzu vom Router 23 benötigten Routingtabellen sind in Fig. 3 dargestellt.

Hingegen werden Sprachpakte mit der IP-Zieladresse/Präfix FEC1 vom Router 23 direkt zum Zielgrenzrouter 24 übertragen. An dieser Stelle sei erwähnt, dass Algorithmen zur Berücksichtigung der Verkehrslast bei der Verkehrslenkung von Informationspaketen bekannt sind und daher nicht näher erläutert werden. Eine Lastenausgleichs-Steuereinrichtung 60, die entsprechende Algorithmen ausführen kann, ist im Router 23 vorgesehen, wie in Fig. 3 dargestellt.

Nachdem die Routen zwischen dem Ursprungsgrenzrouter 21 und dem Zielgrenzrouter 24 ermittelt worden sind, können MPLS-Pakete mit der IP-Zieladresse/Präfix FEC1 über das Kommunikationsteilnetz 20 übertragen werden. Um die richtige Route zu finden, werden in den beteiligten Routern das Labelfeld und gegebenenfalls die drei EXP-Bits in den zu übertragenden MPLS-Paketen ausgewertet. Lediglich der Router 23 muss dazu aktiviert werden, auch die EXP-Bits in einem MPLS-Paket auszuwerten. Denn der Router 23 soll in Abhängigkeit des Informationstyps, d. h. Sprach- oder Dateninformation, MPLS-Pakete über unterschiedliche Routen zum Zielgrenzrouter 24 weiterleiten.

## Patentansprüche

1. Verfahren, zum Ermitteln labelvermittelter Routen zwischen einem Quell- und einem Zielrouter (11, 14; 21, 24) eines unabhängigen Kommunikationsteilnetzes (10; 20), über das Informationspakete mit einer vorbestimmten Zieladresse übertragen werden sollen, mit folgenden Verfahrensschritten:
in Abhängigkeit der Dienstqualität (QoS) der zu übertragenden Informationen werden unter Anwendung eines IP-basierten internen Teilnetz-Routingprotokolls unterschiedliche Routentopologien innerhalb des Kommunikationsteilnetzes berechnet, wobei eine Topologie-Routingtabelle für jede Routentopologie, zu der ein Router gehört, in diesem Router (12; 23) gespeichert wird;
es werden die Routentopologien und die dazugehörenden Router ermittelt, über die Informationspakte mit der vorbestimmten Zieladresse von dem Quellrouter (11: 21) zum Zielrouter (14; 24) übertragen werden sollen;
jedem Routenabschnitt, der zu einer ermittelten Routentopologie gehört, wird unter Anwendung des Labelverteilungsprotokolls LDP ein Label zugeordnet,
**dadurch gekennzeichnet, dass** Router, die mehreren ermittelten Routentopologien angehören,
- Informationspakete ungeachtet der Dienstqualität über einen mit dem gleichen Labels gekennzeichneten Routenabschnitt übertragen, wenn der jeweilige Router (11, 21) bei einer Prüfung feststellt, dass die in diesem Router (11; 21) gespeicherten Topologie-Routingtabellen die gleiche abgehende Verbindung aufweisen, und
- nur dann verschiedene Label für abgehende Routenabschnitte ermitteln, wenn ankommende Informationspakete von dem jeweiligen Router (12; 23) in Abhängigkeit der Dienstqualität an verschiedene Router weitergeleitet werden können.

2. Verfahren nach Anspruch 1,
**dadurch gekennzeichnet, dass**
das Labelverteilungsprotokoll in einer Mehrfachprotokoll-Labelvermittlungsarchitektur (MPLS; Multi Protocol Label Switching) angewendet wird, und wobei das interne Teilnetz-Routingprotokoll ein Link-State-Protokoll, insbesondere das IS-IS- (Intermediate System to Intermediate System) oder das OSPF (Open Shortest Path First)-Routingprotokoll ist.

3. Verfahren nach Anspruch 2,
**dadurch gekennzeichnet, dass**
über das unabhängige Kommunikationsteilnetz (10, 20) MPLS-Informationspakete übertragen werden, die ein Labelfeld und ein EXP-Feld enthalten.

4. Verfahren nach Anspruch 3,
**dadurch gekennzeichnet, dass**
die Router (11-14; 21-25) das Labelfeld und das EXP-Feld der empfangenen MPLS-Pakete zur Auswahl der für das jeweilige MPLS-Paket zu wählenden abgehenden Verbindung auswerten.

5. Router für den Einsatz in einem unabhängigen Kommunikationsteilnetz (10, 20),
umfassend
eine Einrichtung, die ein IP-basiertes internes Teilnetz-Routingprotokoll ausführt, um in Abhängigkeit von der Dienstqualität (QoS) zu übertragender Informationen unterschiedliche Routentopologien innerhalb eines unabhängigen Kommunikationsteilnetzes (10, 20) zu ermitteln,
eine Einrichtung, die das Labelverteilungsprotokoll ausführt, um mit jedem benachbarten Router, der derselben Routentopologie angehört, einen Label für den zwischen benachbarten Routern liegenden Routenabschnitt zu bestimmen,
eine Speichereinrichtung zum Ablegen wenigstens einer Topologie-Routingtabelle und wenigstens einer labelbasierten Routingtabelle, **dadurch gekennzeichnet, dass** der Router, wenn er mehreren Routentopologien angehört,
- in der Speichereinrichtung für jede Routentopologie, zu der der Router gehört, eine Topologie-Routingtabelle speichert,
- Informationspakete ungeachtet der Dienstqualität Über einen mit dem gleichen Label gekennzeichneten Routenabschnitt überträgt, wenn er bei einer Prüfung feststellt, dass die gespeicherten Topologie-Routingtabelle die gleiche abgehende Verbindung aufweisen, und
- nur dann verschiedene Label für abgehende Routenabschnitte ermittelt, wenn ankommende Informationspakete von ihm in Abhängigkeit der Dienstqualität an verschiedene Router weitergeleitet werden können.

6. Unabhängiges Kommunikationsteilnetz (10, 20) zur Durchführung eines Verfahrens nach einem der Ansprüche 1 bis 4, mit
mehreren Routern nach Anspruch 5.

## Claims

1. A method for determining label-switched routes between a source router and a target router (11, 14; 21, 24) of an independent communications subnet (10; 20), over which information packets having a predetermined target address are to be transmitted, comprising the following steps:
depending on the quality of service (QoS) of the information to be transmitted different route topologies within the communications subnet are calculated using an IP-based internal subnet routing protocol, wherein a topology routing table for each route topology to which a router belongs is stored in this router (12; 23);
the route topologies and the associated routers are determined, over which the information packets having the predetermined target address are to be transmitted from the source router (11; 21) to the target router (14; 24);
using the label distribution protocol LDP, a label is assigned to each route segment that belongs to a determined route topology, **characterized in that**
routers which belong to multiple determined route topologies
- transmit information packets via a route segment identified with the same label, regardless of the quality of service, if the respective router (11; 21) determines that the topology routing tables stored in this router (11; 21) have the same outgoing path, and
- only determine different labels for outgoing route segments, if the respective router (12; 23) can forward incoming information packets to different routers depending on the quality of service.

2. The method of claim 1, **characterized in that** the label distribution protocol is used in a multi-protocol label switching (MPLS) architecture, the internal subnet routing protocol being a link-state protocol, in particular the Intermediate System to Intermediate System (IS-IS) or the Open Shortest Path First (OSPF) routing protocol.

3. The method of claim 2, **characterized in that** MPLS information packets are transmitted over the independent communications subnet (10, 20) that contain a label field and an EXP field.

4. The method of claim 3, **characterized in that** the routers (11-14; 21-25) analyze the label field and the EXP field of the received MPLS packets for determining the outgoing path to be selected for the respective MPLS packet.

5. A router for use in an independent communications subnet (10, 20), comprising
a device that executes an IP-based internal subnet routing protocol in order to determine different route topologies within an independent communications subnet (10, 20) as a function of the quality of service (QoS) of the information to be transmitted,
a device that executes the label distribution protocol in order to determine with every neighbouring router belonging to the same route topology a label for the path lying between neighbouring routers; and
a memory device for storing at least one topology routing table and at least one label-based routing table, **characterized in that**
the router, if it belongs to multiple routing topologies,
- stores a topology routing table in the memory device for each routing topology to which the router belongs,
- transmits information packets via a route segment identified with the same label, regardless of the quality of service, if the router determines that the stored topology routing tables have the same outgoing path, and
- only determines different labels for outgoing route segments, if the router can forward incoming information packets to different routers depending on the quality of service.

6. An independent communications subnet (10, 20) for implementing a method according to any one of claims 1 to 4, comprising multiple routers according to claim 5.

## Revendications

1. Procédé destiné à déterminer des itinéraires commutés par label entre un routeur source et un routeur cible (11, 14 ; 21, 24) d'un réseau partiel de communication (10 ; 20) indépendant, par lequel des paquets d'information doivent être transmis avec une adresse cible prédéfinie, comprenant les étapes de procédé suivantes :
en fonction de la qualité de service (QoS) des informations à transmettre, on calcule différentes topologies d'itinéraire à l'intérieur du réseau partiel de communication en utilisant un protocole de routage de réseau partiel interne et basé sur IP, une table de routage de topologie étant mémorisé dans ce routeur (12 ; 23) pour chaque topologie d'itinéraire à laquelle appartient un routeur ;
on détermine les topologies d'itinéraires et les routeurs spécifiques, par lesquels des paquets d'information doivent être transmis avec l'adresse cible prédéfinie du routeur source (11 ; 21) au routeur cible (14 ; 24) ; un label est attribué à chaque tronçon d'itinéraire qui fait partie d'une topologie d'itinéraire déterminée en utilisant le protocole de répartition de label LDP, **caractérisé en ce que** des routeurs, qui appartiennent à plusieurs topologies d'itinéraires déterminées,
- transmettent des paquets d'information quelle que soit la qualité de service par un tronçon d'itinéraire caractérisé avec le même label lorsque le routeur (11 ; 21) respectif constate lors d'un test que les tables de routage de topologie mémorisées dans ce routeur (11 ; 21) présentent la même liaison sortante, et
- déterminent différents labels pour des tronçons d'itinéraire sortants uniquement dans les cas où des paquets d'information entrants peuvent être transmis par le routeur (12 ; 23) respectif en fonction de la qualité de service à différents routeurs.

2. Procédé selon la revendication 1,
**caractérisé en ce que** :
le protocole de répartition de label est appliqué dans une architecture de transmission de label multiprotocole (MPLS ; Multi Protocol Label Switching), et le protocole de routage interne de réseau partiel étant un protocole Link-State, en particulier le protocole de routage IS-IS (Intermediate System to Intermediate System) ou le protocole de routage OSPF (Open Shortest Path First).

3. Procédé selon la revendication 2,
**caractérisé en ce que** :
des paquets d'informations MPLS, qui contiennent un champ de label et un champ EXP, sont transmis par le réseau partiel de communication indépendant (10, 20).

4. Procédé selon la revendication 3,
**caractérisé en ce que** :
les routeurs (11-14 ; 21-25) analysent le champ de label et le champ EXP des paquets MPLS reçus pour sélectionner la liaison sortante à choisir pour le paquet MPLS respectif.

5. Routeur pour l'utilisation dans un réseau partiel de communication indépendant (10 ; 20),
comprenant :
un dispositif qui exécute un protocole de routage de réseau partiel interne et basé sur IP, afin de transmettre, en fonction de la qualité de service (QoS) d'informations à transmettre, différentes topologies d'itinéraire à l'intérieur d'un réseau partiel de communication (10, 20) indépendant,
un dispositif, qui exécute le protocole de répartition de label, afin de déterminer avec chaque routeur voisin, qui fait partie de la même topologie d'itinéraire, un label pour le tronçon d'itinéraire situé entre des routeurs voisins,
un système de stockage pour déposer au moins une table de routage de topologie et au moins une table de routage basé sur label, **caractérisé en ce que**, lorsque le routeur appartient à plusieurs topologies d'itinéraires,
- stocke une table de routage de topologie dans le système de stockage pour chaque topologie d'itinéraire à laquelle appartient le routeur,
- transmet des paquets d'information, quelle que soit la qualité de service, par un tronçon d'itinéraire identifié avec le même label lorsqu'il constate lors d'un essai que les tables de routage de topologie stockées présentent la même liaison sortante, et
- détermine différents labels pour des tronçons d'itinéraires sortants uniquement dans les cas où des paquets d'information entrants peuvent être transmis par lui en fonction de la qualité de service à différents routeurs.

6. Réseau partiel de communication (10, 20) indépendant destiné à mettre en oeuvre un procédé selon l'une des revendications 1 à 4, comprenant plusieurs routeurs selon la revendication 5.
